Europäisches Patentamt

European Patent Office

Office européen des brevets

(11) Numéro de publication : **0 108 691**
**B1**

# (12) FASCICULE DE BREVET EUROPÉEN

(45) Date de publication du fascicule du brevet :
09.07.86

(21) Numéro de dépôt : 83402129.7

(22) Date de dépôt : 02.11.83

(51) Int. Cl.⁴ : **G 21 C 13/06, G 21 C 1/02**

(54) Bouchon-couvercle du coeur d'un réacteur nucléaire à neutrons rapides.

(30) Priorité : 05.11.82 FR 8218570

(43) Date de publication de la demande :
16.05.84 Bulletin 84/20

(45) Mention de la délivrance du brevet :
09.07.86 Bulletin 86/28

(84) Etats contractants désignés :
BE DE GB IT LU NL

(56) Documents cités :
FR-A- 2 289 031
FR-A- 2 383 504
GB-A- 2 031 642
PATENTS ABSTRACTS OF JAPAN, vol. 3, no. 97, 17
août 1979, page 44M69
PATENTS ABSTRACTS OF JAPAN, vol. 3, no. 93, 8
août 1979, page 139M68
KERNENERGIE, vol. 17, no. 7, 1974, Berlin (DE) K.
GORSKI et al.: "Das Kernkraftwerk "Bruno Leuschner" Greifswald", pages 200-222.
PATENTS ABSTRACTS OF JAPAN, vol. 3, no. 69, 14
juin 1979, page 95M62
PATENTS ABSTRACTS OF JAPAN, vol. 3, no. 154, 18
décembre 1979, page 34M85

(73) Titulaire : **NOVATOME**
**20 Avenue Edouard Herriot**
**F-92350 Le Plessis Robinson (FR)**

(72) Inventeur : **Malaval, Claude**
**115 bis avenue du Bois de Verrières**
**F-92160 Antony (FR)**

(74) Mandataire : **Bressand, Georges et al**
**c/o CABINET LAVOIX 2 Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne le bouchon-couvercle du cœur d'un réacteur nucléaire à neutrons rapides.

Les réacteurs nucléaires à neutrons rapides qui sont généralement refroidis par un métal liquide tel que le sodium comportent une cuve fermée par une dalle horizontale de grande épaisseur et remplie par du sodium liquide de refroidissement dans lequel est plongé le cœur du réacteur. Au-dessus du cœur, on dispose un ensemble appelé « bouchon-couvercle du cœur » qui supporte les tubes fourreaux des barres de commande et toute l'instrumentation du cœur comprenant en particulier les tubes de prélèvement de sodium à la sortie des assemblages. Ce bouchon-couvercle du cœur assure également par sa partie inférieure la déflection du courant de sodium sortant du cœur pour le diriger vers les échangeurs intermédiaires à la périphérie de la cuve.

Le bouchon-couvercle du cœur est constitué par une enveloppe cylindrique à axe vertical dont la partie supérieure est fixée à une plaque de support reposant sur une partie de la dalle du réacteur autour de l'ouverture de passage du bouchon-couvercle du cœur au travers de la dalle. Cette ouverture de passage est prévue dans le petit bouchon tournant monté mobile en rotation autour d'un axe vertical dans le grand bouchon tournant qui est lui-même monté mobile en rotation autour d'un axe vertical sur la partie fixe de la dalle.

Les tubes fourreaux des barres de commande ainsi que des tubes d'instrumentation sont fixés à leur partie supérieure sur la plaque de support et traversent verticalement l'enveloppe cylindrique. Sur ces tubes sont fixées, de façon rigide, des entretoises transversales par rapport à l'enveloppe cylindrique du bouchon-couvercle du cœur.

Cet ensemble de grande hauteur par rapport à son diamètre plonge dans la cuve à la verticale du cœur et comporte à sa partie inférieure une grille fixée sur les tubes fourreaux de barres de commande et qui supporte les tubes de prélèvement de sodium.

Un tel ensemble de grande hauteur comportant une structure rigide subit des contraintes mécaniques et des contraintes thermiques de grande amplitude.

On a proposé dans le brevet français FR-A-2 289 031 de diminuer les contraintes thermiques en prévoyant des ouvertures dans la virole verticale du bouchon-couvercle et d'autres ouvertures dans les entretoises. A la partie inférieure du bouchon-couvercle, juste au-dessus du cœur, on fixe une plaque horizontale plane percée sur une grande partie de sa surface et permettant le passage et la canalisation du sodium liquide qui pénètre à l'intérieur de l'enveloppe cylindrique par les ouvertures prévues dans les entretoises et ressort de cette enveloppe cylindrique par les ouvertures prévues dans sa surface latérale. On obtient ainsi un meilleur équilibrage des températures et donc une réduction des contraintes thermiques dans la structure du bouchon-couvercle.

Cependant, cette disposition a l'inconvénient de ne pas répartir le sodium de façon tout à fait adéquate et de ne pas disperser l'énergie du jet de sodium sortant du cœur. Il s'ensuit qu'un jet à forte vitesse frappe la cuve et remonte verticalement le long de celle-ci en créant de fortes perturbations à la surface libre et une alimentation dissymétrique des échangeurs disposés latéralement par rapport au cœur.

Enfin, la structure hyperstatique du bouchon-couvercle du cœur reste sensible aux chocs thermiques qui peuvent avoir lieu, lors de changement de régime du réacteur nucléaire.

Le but de l'invention est donc de proposer un réacteur nucléaire à neutrons rapides refroidi par un métal liquide tel que le sodium, comportant un bouchon-couvercle du cœur assurant la fixation et le guidage des barres de commande et de l'instrumentation du cœur ainsi que la dispersion et la déflection du fluide de refroidissement sortant du cœur et comportant une plaque de support reposant sur le bouchon tournant fermant la cuve du réacteur, autour de l'ouverture de passage du bouchon-couvercle du cœur dans le bouchon tournant, une enveloppe cylindrique à axe vertical solidaire de la plaque de support à sa partie supérieure, un bouchon de protection contre les radiations occupant le volume intérieur de l'enveloppe cylindrique sur une hauteur correspondant sensiblement à l'épaisseur du bouchon tournant et un ensemble de tubes verticaux destinés à recevoir les barres de commande du réacteur, fixés à leur partie supérieure sur la plaque support, disposés à l'intérieur de l'enveloppe cylindrique et reliés à des entretoises transversales par rapport à l'enveloppe, ce bouchon-couvercle assurant une canalisation efficace du fluide de refroidissement vers les échangeurs de chaleur ainsi qu'une dispersion adéquate de ce fluide et résistant mieux aux contraintes mécaniques et thermiques que les bouchons-couvercles de l'art antérieur.

Dans ce but, les entretoises fixées aux tubes, à l'intérieur de l'enveloppe, sont constituées par au moins deux voiles coniques ayant un axe confondu avec l'axe de l'enveloppe, un angle au sommet supérieur à 120° et un diamètre extérieur un peu inférieur au diamètre intérieur de l'enveloppe, un jeu existant entre la surface intérieure de l'enveloppe et le bord externe des entretoises, qui sont maintenues en position axiale fixe par rapport à l'enveloppe cylindrique par des butées solidaires de cette enveloppe, l'entretoise située le plus bas dans l'enveloppe cylindrique qui ne comporte pas de trou de passage pour le fluide de refroidissement étant disposée avec sa surface externe dirigée vers le bas, au voisinage de la partie inférieure de l'enveloppe percée d'ouvertures de part et d'autre de l'entretoise inférieure assurant la déflection du fluide de refroidissement.

Afin de bien faire comprendre l'invention, on va maintenant décrire à titre d'exemple non limitatif, un mode de réalisation d'un bouchon-couvercle du cœur d'un réacteur nucléaire à neutrons rapides selon l'invention.

La figure 1 représente, dans une vue en coupe par un plan vertical, un bouchon-couvercle de cœur suivant l'invention

La figure 2 représente, dans une vue en perspective, une partie périphérique d'une entretoise et les dispositifs de fixation axiale de cette entretoise.

La figure 3 représente, dans une vue suivant A de la figure 1, la partie inférieure du bouchon-couvercle du cœur comportant une grille de maintien des tubes de prélèvement.

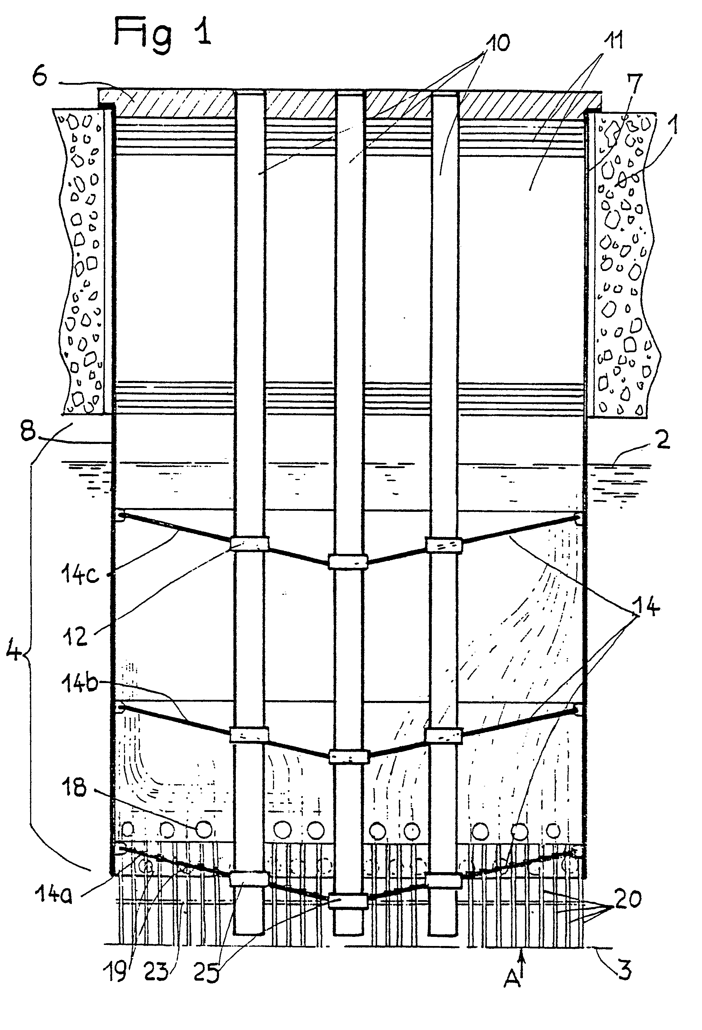

Sur la figure 1, on voit le petit bouchon tournant 1 de grande épaisseur d'un réacteur nucléaire à neutrons rapides qui repose sur le grand bouchon tournant non représenté, lui-même reposant sur la dalle, l'ensemble fermant la cuve de ce réacteur remplie jusqu'au niveau 2 de sodium liquide assurant le refroidissement des assemblages du cœur.

Le cœur du réacteur est constitué d'assemblages disposés verticalement à l'intérieur de la cuve et baignant dans le sodium liquide sous le niveau 2. On a représenté en 3 le niveau supérieur des têtes des assemblages combustibles constituant le cœur.

A la verticale du cœur du réacteur est disposé le bouchon-couvercle du cœur de ce réacteur désigné de façon générale par le repère 4.

Ce bouchon-couvercle du cœur comporte une plaque de support 6 reposant par sa partie périphérique sur le petit bouchon tournant 1 autour de l'ouverture de passage 7 du bouchon-couvercle du cœur du réacteur. Le petit bouchon tournant est monté rotatif autour d'un axe vertical sur le grand bouchon tournant lui-même monté rotatif autour d'un axe vertical sur la partie fixe périphérique de la dalle du réacteur.

Le bouchon-couvercle du cœur 4 comporte une enveloppe cylindrique de grande longueur 8 fixée à sa partie supérieure sur la plaque de support 6. L'enveloppe cylindrique 8 a un diamètre légèrement inférieur au diamètre du passage 7 dans le petit bouchon tournant 1.

Sur la figure 1, on a représenté trois tubes-fourreaux ou tubes-guides 10 servant au support et au guidage des mécanismes de barres et des barres de commande du réacteur. Ces tubes 10 sont fixés à leur partie supérieure sur la plaque de support 6 et traversent verticalement l'ensemble de l'enveloppe cylindrique 8 du bouchon-couvercle du cœur.

Sur toute la traversée du petit bouchon tournant 1 l'enveloppe cylindrique 8 est remplie d'un matériau de protection contre les radiations constitué par des plaques d'acier 11 superposées.

A l'intérieur de l'enveloppe 8, les tubes 10 sont reliés rigidement par l'intermédiaire de bagues de fixation 12 à des voiles coniques 14 constituant des entretoises transversales de la structure du bouchon-couvercle du cœur 4. Ces voiles 14 ont la forme de cônes d'angle au sommet voisin de 160° dirigés avec leur sommet vers le bas, c'est-à-dire avec leur surface externe dirigée vers la partie inférieure du bouchon-couvercle du cœur 4.

Le diamètre de la base de ces viroles coniques ou diamètre extérieur de la virole est un peu inférieur au diamètre intérieur de la virole cylindrique 8. Les axes de ces entretoises étant confondus avec l'axe de la virole cylindrique 8, il existe un jeu entre le bord externe de l'entretoise et la surface interne de l'enveloppe cylindrique 8, sur toute la périphérie de l'entretoise.

Dans le cas d'un bouchon-couvercle du cœur d'un réacteur nucléaire à neutrons rapides tel que construit actuellement, d'un diamètre un peu inférieur à 5 mètres, on utilise des viroles coniques constituées par une tôle d'une épaisseur de 20 à 25 mm, le jeu entre la virole conique et l'enveloppe cylindrique étant de 30 mm. Un tel bouchon-couvercle du cœur renferme trente tubes de barres de contrôle 10 et un tube canal central permettant l'introduction de dispositifs de mesure ou de prélèvement à la verticale du cœur, à sa partie centrale.

Les deux voiles supérieurs 14 disposés suivant la hauteur du bouchon-couvercle du cœur sont pratiquement identiques et comportent quelques perçages en dehors de ceux nécessaires pour le passage des tubes de barres de commande ou d'autres tubes d'instrumentation alors que le voile inférieur ne comporte aucun trou supplémentaire. Le sodium liquide sortant du cœur ne peut passer à l'intérieur du bouchon-couvercle du cœur que par l'espace ménagé entre les viroles coniques et l'enveloppe cylindrique.

Les tubes fourreaux 10 des barres de commande ainsi que les autres tubes d'instrumentation sont également entièrement continus sur toute leur longueur, ce qui n'était pas le cas de tous les tubes des bouchons-couvercles du cœur selon l'art antérieur. Ces tubes sont fermés à leur partie supérieure, si bien qu'ils renferment du sodium stagnant et qu'aucune circulation de sodium ne se produit dans leur volume interne.

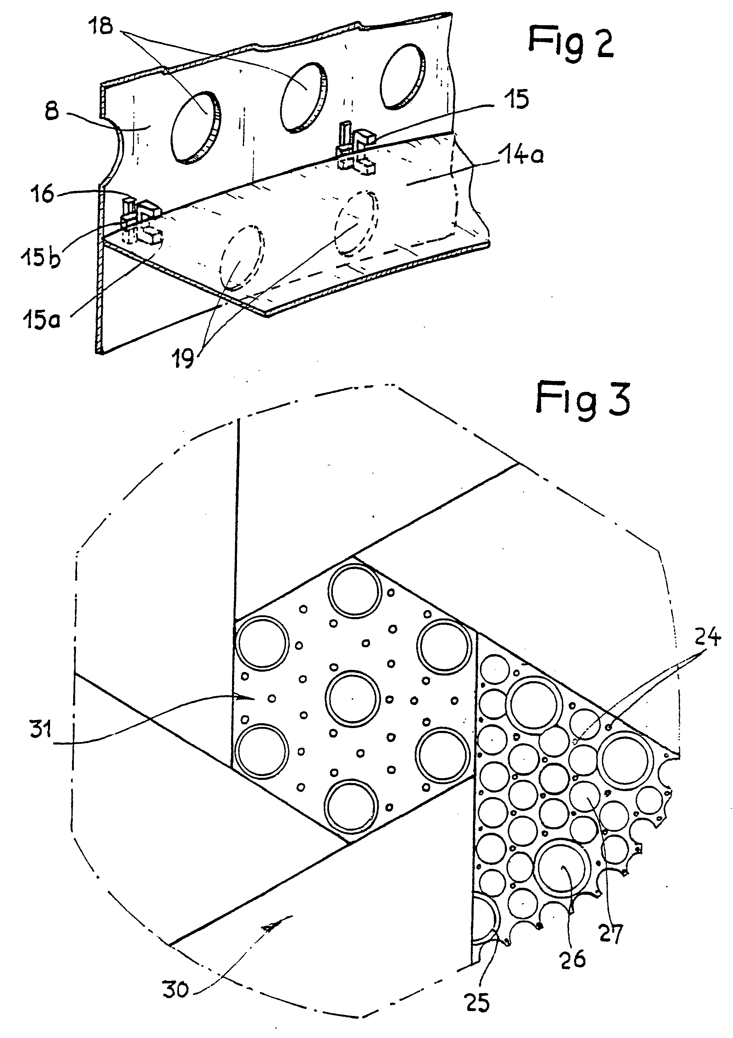

Ainsi qu'il est visible sur les figures 1 et 2, les viroles coniques 14 sont maintenues en position axiale par rapport à l'enveloppe cylindrique 8 par des butées 15 comportant un décrochement central 15a pour l'engagement du bord externe du voile conique 14. Ces butées sont fixées par soudure à l'intérieur de lumières oblongues 16 ménagées dans la paroi de l'enveloppe 8 qui permettent un réglage préalable en hauteur de la butée 15 grâce à sa partie arrière de fixation 15b.

Pour chacun des voiles coniques 14, on utilise douze butées 15 disposées à 30° sur la surface interne de la virole 8 dans un plan horizontal.

De part et d'autre de la virole inférieure 14a, la paroi latérale de l'enveloppe cylindrique 8 est percée d'ouvertures 18 et 19, les ouvertures 18 étant disposées au-dessus de la virole 14a et les ouvertures 19 en dessous de la virole 14a. Ce sont les seules ouvertures ménagées dans la surface latérale de l'enveloppe cylindrique 8, si l'on excepte les trous oblongs 16 de fixation des butées 15 de petites dimensions et qui sont au moins partiellement refermés après la fixation des butées 15.

La rangée supérieure d'ouvertures 18 comporte cinquante ouvertures de diamètre 145 mm, à 80 mm au-dessus de la virole conique.

La rangée inférieure d'ouvertures 19 comporte cinquante ouvertures de diamètre 145 mm disposées à 220 mm au-dessous des ouvertures 18.

Le voile conique inférieur 14a porte également des tubes de prélèvement 20 verticaux traversant le voile conique 14a et fixés par soudage sur celui-ci. Chacun des tubes de prélèvement est disposé à la verticale exacte d'un assemblage et permet le prélèvement de sodium à la sortie de cet assemblage pour la détection de fuites éventuelles.

Les prélèvements de sodium réalisés par les tubes 20 sont recueillis à l'intérieur du bouchon-couvercle du cœur pour être dirigés vers un module de localisation de rupture de gaines.

Sur la figure 3, on voit la partie inférieure du bouchon-couvercle du cœur constituée par une plaque ou grille 23 horizontale, plane et percée sur la plus grande partie de sa surface (90 % de la surface est constituée par des ouvertures).

Cette grille 23 antivibratoire permet le maintien des tubes de prélèvement 20, un réseau de trous 24 correspondant au réseau des assemblages étant usiné dans la grille 23. La grille 23 est maintenue par les tubes 10 dont la partie inférieure munie d'une bague de fixation 25 est engagée dans les trous 26 de la grille 23.

Enfin, la grille 23 comporte un réseau de trous 27 différents des trous 24 et 26, permettant la canalisation du flux de sodium sortant du cœur à la partie supérieure des assemblages.

Ainsi qu'il est visible sur la figure 3, la grille 23 est constituée par un ensemble de six segments 30 juxtaposés et maintenus par les tubes 10.

Il n'y a pas d'élément dans la partie centrale 31, la longueur des tubes de prélèvement 20 étant insuffisante pour qu'ils entrent en vibration.

La canalisation du sodium par les trous 27 n'est également pas indispensable dans cette partie centrale de la grille.

Le sodium sortant du cœur se déplace verticalement et de bas en haut, une faible fraction du débit pénétrant dans les tubes de prélèvement 20 pour la détection de ruptures de gaines éventuelles.

La quasi totalité du flux de sodium parvient à la grille 23 et traverse cette grille par les ouvertures de canalisation du flux de sodium 27. En effet, toutes les autres ouvertures de la grille 23 sont fermées soit par les tubes de prélèvement 20 soit par les tubes 10 fermés à leur partie supérieure et ne permettant pas une circulation de sodium.

Le flux de sodium vient alors frapper la virole inférieure 14a qui joue le rôle de déflecteur pour ce flux de sodium qui est renvoyé latéralement vers la partie périphérique de la cuve contenant les échangeurs de chaleur.

Une partie du sodium est renvoyée directement dans la partie périphérique de la cuve sans avoir pénétré dans l'enveloppe cylindrique 8, une autre partie est renvoyée par les ouvertures 19, enfin le reste du sodium parvenant à la partie périphérique de l'entretoise conique 14a passe par le jeu entre cette virole conique et la surface intérieure de l'enveloppe cylindrique 8 et est évacué en quasi totalité par les ouvertures 18.

Une très faible fraction du sodium circule dans l'enveloppe cylindrique passant par le jeu existant entre le bord interne des viroles 14b et 14c et la surface intérieure de l'enveloppe 8.

Le flux principal de sodium est donc canalisé par l'espace existant entre la grille 23 et la virole conique 14a. Cet espace a une section de passage croissante de l'intérieur vers l'extérieur. La vitesse du flux de sodium a donc tendance non seulement à ne pas augmenter mais encore à diminuer de l'intérieur vers l'extérieur.

On calme donc le flux de sodium, ce qui est bénéfique pour la tenue des éléments constituant la structure interne du réacteur pour la répartition du sodium vers les échangeurs et pour la tranquillisation de la surface libre.

En outre, la structure non rigide du bouchon-couvercle du cœur permet une meilleure tenue aux contraintes mécaniques ou thermiques dans le réacteur.

L'enveloppe cylindrique 8 est en effet bloquée ponctuellement par les tubes 10 dans les directions radiales par rapport aux entretoises 14, ce qui engendre une déformation élastique polygonale de la virole cylindrique conduisant à des contraintes faibles. Sous des efforts axiaux, les viroles 14, grâce à leur forme conique, peuvent se déformer élastiquement, pour encaisser les déplacements relatifs de l'enveloppe 8 et des tubes 10, par exemple sous l'effet de dilatations différentielles.

Les principaux avantages du dispositif selon l'invention sont donc de permettre des déformations limitées de la structure du bouchon-couvercle de cœur permettant de réduire les contraintes subies par ce bouchon-couvercle de cœur pendant le fonctionnement du réacteur. Ces contraintes peuvent être d'origine thermique (modification du régime thermique du réacteur) ou d'origine mécanique et externe au réacteur (par exemple séismes). En outre, la déflection et la canalisation du sodium liquide sortant du cœur sont réalisées de façon optimale et s'accompagnent d'une tranquillisation du flux de sodium.

Enfin, la construction et l'assemblage du bouchon-couvercle du cœur sont grandement facilités par rapport à ce qu'il en était pour les bouchons-couvercles du cœur selon l'art antérieur.

L'invention ne se limite pas au mode de réalisation qui vient d'être décrit ; c'est ainsi qu'on peut utiliser un nombre quelconque de viroles coniques 14 servant d'entretoises à l'intérieur de l'enveloppe cylindrique, ce nombre doit cependant être supérieur à deux.

On peut imaginer de fixer les tubes de prélèvement 20 sur la seconde virole conique et de les engager sans jeu dans des ouvertures prévues dans la virole conique inférieure 14a servant de déflecteur du métal liquide.

Le bouchon-couvercle de cœur suivant l'invention peut comporter tous les éléments nécessaires pour faire passer l'instrumentation du cœur, même si ces éléments n'ont pas été décrits de façon détaillée.

Le bouchon de protection constituant la partie supérieure du bouchon-couvercle de cœur peut être réalisé d'une manière différente de celle décrite, par exemple en empilant ou en superposant des pièces massives au lieu de plaques d'épaisseur relativement faible.

On peut également modifier suivant les besoins la dimension et la répartition des ouvertures de passage du sodium à la partie inférieure de l'enveloppe cylindrique.

On peut choisir un angle au sommet des viroles coniques différent de 160° et même utiliser des viroles successives avec des angles d'ouverture différents. Cependant ces angles d'ouverture doivent être supérieurs à 120° pour répondre aux besoins de l'invention.

Enfin, le bouchon-couvercle du cœur suivant l'invention s'applique à tous les réacteurs nucléaires à neutrons rapides utilisant un fluide de refroidissement traversant le cœur de bas en haut et recueilli, après son échauffement dans le cœur, dans la partie périphérique de la cuve du réacteur.

## Revendications

1. Réacteur nucléaire à neutrons rapides refroidi par un métal liquide tel que le sodium comportant un bouchon-couvercle (4) du cœur assurant la fixation et le guidage des barres de commande et de l'instrumentation du cœur ainsi que la dispersion et la déflection du fluide de refroidissement sortant du cœur et comportant une plaque de support (6) reposant sur le bouchon tournant (1) fermant la cuve du réacteur, autour de l'ouverture de passage (7) du bouchon-couvercle du cœur (4) dans le bouchon tournant (1) une enveloppe cylindrique (8) à axe vertical solidaire de la plaque de support (6) à sa partie supérieure, un bouchon de protection (11) contre les radiations occupant le volume intérieur de l'enveloppe cylindrique sur une hauteur correspondant sensiblement à l'épaisseur du bouchon tournant et un ensemble de tubes verticaux (10) destinés en particulier à recevoir les barres de commande du réacteur, fixés à leur partie supérieure sur la plaque support (6), disposés à l'intérieur de l'enveloppe cylindrique (8) et reliés à des entretoises (14) transversales par rapport à l'enveloppe (8), caractérisé par le fait que les entretoises (14) fixées aux tubes (10), à l'intérieur de l'enveloppe (8), sont constituées par au moins deux voiles coniques (14) ayant un axe confondu avec l'axe de l'enveloppe (8), un angle au sommet supérieur à 120° et un diamètre extérieur un peu inférieur au diamètre intérieur de l'enveloppe (8), un jeu existant entre la surface intérieure de l'enveloppe (8) et le bord externe des entretoises (14) qui sont maintenues en position axiale fixe par rapport à l'enveloppe cylindrique (8) par des butées (15) solidaires de cette enveloppe (8), l'entretoise (14a) située le plus bas dans l'enveloppe cylindrique (8) qui ne comporte pas de trou de passage pour le fluide de refroidissement étant disposée avec sa surface externe dirigée vers le bas, au voisinage de la partie inférieure de cette enveloppe (8) percée d'ouvertures (18, 19), de part et d'autre de l'entretoise inférieure (14a) assurant la déflection du fluide de refroidissement.

2. Réacteur nucléaire suivant la revendication 1, caractérisé par le fait que les tubes verticaux (10) sont continus sur toute leur longueur et fermés à leur partie supérieure, au niveau de la plaque de support (6).

3. Réacteur nucléaire suivant l'une quelconque des revendications 1 et 2, comportant un bouchon-couvercle du cœur ayant un diamètre un peu inférieur à cinq mètres, caractérisé par le fait qu'il comporte au moins deux entretoises (14) constituées par des viroles coniques d'angle au sommet voisin de 160° disposées à l'intérieur de l'enveloppe cylindrique avec un jeu voisin de 30 mm.

4. Réacteur nucléaire suivant l'une quelconque des revendications 1, 2 et 3, dont le bouchon-couvercle du cœur comporte à sa partie inférieure une plaque plane horizontale ou grille (23), fixée sur les tubes (10) et comportant des ouvertures (24) pour le passage de tubes d'instrumentation (20) ainsi que des trous de passage (27) du fluide de refroidissement, caractérisé par le fait que cette grille (23) est constituée par plusieurs portions (30) juxtaposées identiques fixées sur les tubes (10) et maintenues les unes par rapport aux autres grâce à ces tubes (10).

5. Réacteur nucléaire suivant la revendication 4, caractérisé par le fait que les tubes d'instrumentation (20) sont fixés sur l'entretoise inférieure (14a) au niveau d'ouvertures prévues dans celle-ci et sont engagés dans des trous (24) de la grille.

6. Réacteur nucléaire suivant la revendication 4, caractérisé par le fait que les tubes d'instrumentation (20) sont fixés sur la deuxième entretoise (14b) disposée juste au-dessus de l'entretoise (14a) de déflection du fluide de refroidissement et engagés avec un faible jeu au niveau d'ouvertures prévues dans cette entretoise (14a).

## Claims

1. Fast neutron nuclear reactor cooled by a liquid metal such as sodium comprising a core cover-plug ensuring the fixing and the guidance of the control rods and of the core instrumentation as well as the dispersion and the deflection of the cooling fluid leaving the core and comprising a support plate (6) resting on the rotating plug (1) closing the reactor vessel, around the opening for passage (7) of the core cover-plug (4) in the rotating plug (1), a cylindrical shell (8) with a vertical axis fixed integrally to the support plate (6) at its upper part, a plug for radiation protection (11) occupying the internal volume of the cylindrical shell over a height which corresponds substantially to the thickness of the turning plug and a set of vertical tubes (10) intended in particular to receive the control rods, which are fixed to the support plate (6) at their upper end, arranged within the cylindrical shell (8) and connected to braces (14) which are transversal relative to the shell (8), characterized by the fact that the braces (14) which are fixed to the tubes (10), inside the shell (8), consist of at least two conical webs (14) having an axis coinciding with the axis of the shell (8), a top angle greater than 120° and an external diameter which is slightly smaller than the internal diameter of the shell (8), a clearance existing between the inner surface of the shell (8) and the outer edge of the braces (14) which are held in an axial position relative to the cylindrical shell (8) by abutments (15) which are integral with this shell (8), the brace (14a) situated in the lowest position in the cylindrical shell (8) which has no sodium passage hole being arranged with its outer surface directed downwards, in the vicinity of the lower part of this shell (8) which is pierced with openings (18, 19) on either side of the lower brace (14a) providing the deflection of the cooling fluid.

2. A fast neutron nuclear reactor according to claim 1, characterized by the fact that the vertical tubes (10) are continuous over their entire length and are closed in their upper part, in the region of the support plate (6).

3. A fast neutron nuclear reactor according to any one of claims 1 and 2, comprising a core coverplug having a diameter slightly under five meters, characterized by the fact that it comprises at least two braces (14) consisting of conical shells having a top angle close to 160°, arranged within the cylindrical shell with a clearance close to 30 mm.

4. A fast neutron nuclear reactor according to any one of claims 1, 2 and 3, the core cover-plug of which comprises in its lower part a flat horizontal plate or grid (23) fixed to the tubes (10) and comprising openings for the passage of instrumentation tubes (20) als well as holes (27) for passage of cooling fluid, characterized by the fact that this grid (23) consists of several identical parts (30) placed side-by-side, fixed to the tubes (10) and held in relation to each other by virtue of these tubes (10).

5. A fast neutron nuclear reactor according to claim 4, characterized by the fact that the instrumentation tubes (20) are fixed to the lower brace (14a) in the region of openings provided in the latter and are fitted in holes (24) of the grid.

6. A fast neutron nuclear reactor as claimed in claim 4, characterized by the fact that the instrumentation tubes (20) are fixed to the second brace (14b) arranged just above the brace (14a) for deflecting the cooling fluid, and are fitted with a small clearance in openings provided in the lower deflection brace (14a).

**Patentansprüche**

1. Schneller Reaktor, der durch ein flüssiges Metall, wie Natrium, gekühlt wird, mit einem Deckelstopfen (4) für den Reaktorkern, der die Befestigung und die Führung der Steuerstäbe und der Instrumentierung des Reaktorkerns sowie die Verteilung und die Ablenkung des aus dem Reaktorkern austretenden Kühlfluids gewährleistet, und mit folgendem : einer Tragplatte (6), die auf dem den Reaktorbehälter verschließenden Drehstopfen (1) ruht, einem eine senkrechte Achse aufweisenden zylindrischen Mantel (8), der sich um die Durchtrittsöffnung (7) des Deckelstopfens des Reaktorkerns (4) am Drehstopfen (1) erstreckt und an seinem Oberteil mit der Tragplatte (6) fest verbunden ist, einem gegenüber Strahlung schützenden Schutzstopfen (11), der das innere Volumen des zylindrischen Mantels auf einer Höhe einnimmt, die im wesentlichen der Dicke des Drehstopfens entspricht, und einer Anordnung von senkrechten Rohren (10), die insbesondere zur Aufnahme der Steuerstäbe des Reaktors dienen und an ihrem Oberteil an der Tragplatte (6) befestigt, innerhalb des zylindrischen Mantels (8) angeordnet und gegenüber dem Mantel (8) quer verlaufenden Zwischenwänden (14) verbunden sind, dadurch gekennzeichnet, daß die innerhalb des Mantels (8) an den Rohren (10) befestigten Zwischenwände aus wenigstens zwei kegelförmigen Schalen bestehen, deren Achse mit der Achse des Mantels (8) zusammenfällt, deren Scheitelwinkel größer als 120° ist und deren Aussendurchmesser ein wenig kleiner als der Innendurchmesser des Mantels (8) ist, wobei ein Spiel zwischen der Innenfläche des Mantels und dem äusseren Rand der Zwischenwände (14) besteht, die durch mit dem Mantel (8) fest verbundene Anschläge (15) gegenüber dem zylindrischen Mantel (8) in einer festen Lage gehalten werden, wobei die im zylindrischen Mantel am tiefsten gelegene Zwischenwand (14a), die kein Durchtrittsloch für das Kühlfluid enthält, mit nach unten gerichteter Außenfläche angeordnet ist, wobei die in der Nähe des Unterteils des Mantels (8) beiderseits der unteren Zwischenwand ausgenommenen Öffnungen (18, 19) die Ablenkung des Kühlfluids gewährleisten.

2. Kernreaktor nach Anspruch 1, dadurch gekennzeichnet, daß die senkrechten Rohre (10) auf ihre gesamte Länge durchgehen und an ihrem Oberteil in Höhe der Tragplatte (6) geschlossen sind.

3. Kernreaktor nach einem der Ansprüche 1 und 2 mit einem Deckelstopfen des Reaktorkerns, dessen Durchmesser ein wenig kleiner als 5 m ist, dadurch gekennzeichnet, daß er wenigstens zwei Zwischenwände (14) aufweist, die aus kegelförmigen Ringen mit einem Scheitelwinkel von etwa 160° bestehen, die innerhalb des zylindrischen Mantels mit einem Spiel von etwa 30 mm angeordnet sind.

4. Kernreaktor nach einem der Ansprüche 1, 2 und 3, dessen Deckelstopfen des Reaktorkerns an seinem Unterteil eine waagerechte ebene Platte oder ein Gitter (23) aufweist, das an den Rohren (10) befestigt ist und Öffnungen (24) für den Durchtritt von Instrumentierungsrohren (20) sowie Durchtrittsöffnungen (27) für das Kühlfluid aufweist, dadurch gekennzeichnet, daß das Gitter (30) aus mehreren nebeneinanderliegenden identischen Teilen (30) besteht, die an den Rohren (10) befestigt und durch die Rohre (10) aneinandergehalten sind.

5. Kernreaktor nach Anspruch 4, dadurch gekennzeichnet, daß die Instrumentierungsrohre (20) an der unteren Zwischenwand (14a) in Höhe von in dieser vorgesehenen Öffnungen befestigt und in Löcher (24) des Gitters eingesetzt sind.

6. Kernreaktor nach Anspruch 4, dadurch gekennzeichnet, daß die Instrumentierungsrohre (20) an der zweiten Zwischenwand (14b) befestigt sind, die unmittelbar über der Zwischenwand (14a) für die Ablenkung des Kühlfluids angeordnet ist, und mit geringem Spiel in Höhe von Öffnungen in dieser Zwischenwand (14a) eingesetzt sind.

Fig 1

0 108 691

0 108 691

Fig 2

Fig 3